# EUROPÄISCHE PATENTSCHRIFT

(11) **EP 1 536 976 B1**
(45) Veröffentlichungstag und Bekanntmachung des Hinweises auf die Patenterteilung: **05.04.2006**
(21) Anmeldenummer: 03757764.0
(22) Anmeldetag: 26.08.2003
(51) Int. Cl.: B60N 3/00, B60N 2/46

(54) **ABLAGETISCH FÜR EIN KRAFTFAHRZEUG**
TABLE FOR A MOTOR VEHICLE
TABLETTE D'APPUI POUR AUTOMOBILE

(30) Priorität: 11.09.2002 DE 10242469
(43) Veröffentlichungstag der Anmeldung: 08.06.2005
(73) Patentinhaber: DaimlerChrysler AG, 70567 Stuttgart (DE)
(72) Erfinder: BROENNER, Martin, 97816 Lohr am Main (DE); KOHLBECKER, Bernd, 76437 Rastatt (DE); MATTEDI, Markus, 72141 Walddorfhäslach (DE); ZYGAN, Andreas, 76316 Malsch (DE)
(74) Vertreter: Wagner, Jürgen
(86) Internationale Anmeldenummer: PCT/EP2003/009413
(87) Internationale Veröffentlichungsnummer: WO 2004/033255

(56) Entgegenhaltungen:
- EP-A- 0 960 768
- FR-A- 2 815 306
- US-A- 4 174 669
- US-A- 4 359 004
- US-A- 5 279 488
- US-A- 5 485 793
- US-A- 5 516 016
- US-A- 5 542 360
- US-A- 6 032 587

## Beschreibung

Die Erfindung betrifft einen Ablagetisch für ein Kraftfahrzeug nach der im Oberbegriff der Ansprüche 1 und 3 näher definierten Art. Des weiteren betrifft die Erfindung einen Fahrzeugsitz.

Gattungsgemäße Ablagetische sind aus sehr vielen unterschiedlichen Veröffentlichungen bekannt. Beispielhaft werden in diesem Zusammenhang die DE 33 29 865 A1, die DE 32 47 624 A1, die DE 27 23 148 A1, die DE 20 57 329 A1 oder die DE-PS 1 080 582 genannt. Diese bekannten Ablagetische weisen jedoch verschiedene Nachteile auf.

Zum einen sind sie meist sehr aufwendig gestaltet, insbesondere hinsichtlich der verwendeten Konstruktionen, um ein Zusammenklappen der Tischplatte und Ablegen derselben in einem Ablagefach zu ermöglichen. Dies führt einerseits zu einer anfälligen Mechanik und andererseits zu hohen Kosten, was jedoch gerade im Kraftfahrzeugbau vermieden werden sollte.

Zum anderen kommt es in der Praxis häufiger vor, dass sich Fahrer oder Beifahrer auf diese Ablagetische setzen, was bei den aufgrund der oben beschriebenen Technik zum Zusammenklappen der Ablagetische aufgewendeten Strukturen meist zu einem Brechen der Tischplatte oder zu einer Beschädigung des Tischaufnahmeelementes führt.

Es ist daher Aufgabe der vorliegenden Erfindung, neue Lösungen für Ablagetische anzubieten, durch welche die oben angegebenen Nachteile vermieden werden und sich ein Ablagetisch ergibt, der für die Serienproduktion in einem Kraftfahrzeug geeignet ist.

Erfindungsgemäß wird diese Aufgabe durch die in Anspruch 1 genannten Merkmale gelöst.

Durch die von dem Tragarm abnehmbare Tischplatte ergibt sich eine sehr einfache Möglichkeit, dieselbe in einem Ablagefach abzulegen, bei der vorteilhafterweise auf eine komplizierte Mechanik verzichtet werden kann. Erfindungsgemäß kann der Tragarm ebenfalls von dem Tischaufnahmeelement abgenommen und mittels des erfindungsgemäßen Halteelementes an der Tischplatte angebracht werden, so dass er zusammen mit der ein Losteil bildenden Tischplatte in dem Ablagefach abgelegt werden kann und beim Fahren ein Klappern dieser beiden Teile gegeneinander verhindert wird.

Somit ergibt sich ein Ablagetisch, der bei sachgemäßer Benutzung in sehr ordentlicher Art und Weise verstaut und somit bei seiner Nichtbenutzung geschützt werden kann.

Eine weitere Lösung der Aufgabe ergibt sich aus den Merkmalen des unabhängigen Anspruchs 3.

Die erfindungsgemäß zwischen der Tischplatte und dem Tischaufnahmeelement vorgesehene Überlastsicherung verhindert dabei durch ein definiertes Auslösen bei Überschreiten einer bestimmten Kraft bzw. eines bestimmten Momentes eine Beschädigung der Tischplatte oder des Tischaufnahmeelements, so dass sich ein sehr praxistauglicher Ablagetisch für Kraftfahrzeuge ergibt.

Ein Fahrzeugsitz ergibt sich aus den Merkmalen von Anspruch 11.

Vorteilhafte Ausgestaltungen und Weiterbildungen der Erfindung ergeben sich aus den Unteransprüchen sowie aus dem nachfolgend anhand der Zeichnung prinzipmäßig dargestellten Ausführungsbeispiel.

Dabei zeigen:
- Fig. 1: einen Fahrzeugsitz mit dem daran angebrachten erfindungsgemäßen Ablagetisch;
- Fig. 2: den in einem Ablagefach verstauten Ablagetisch aus Fig. 1; und
- Fig. 3: eine vergrößerte Darstellung der Überlastsicherung zwischen der Tischplatte und dem Tischaufnahmeelement des Ablagetisches im Schnitt nach der Linie III - III aus Fig. 2.

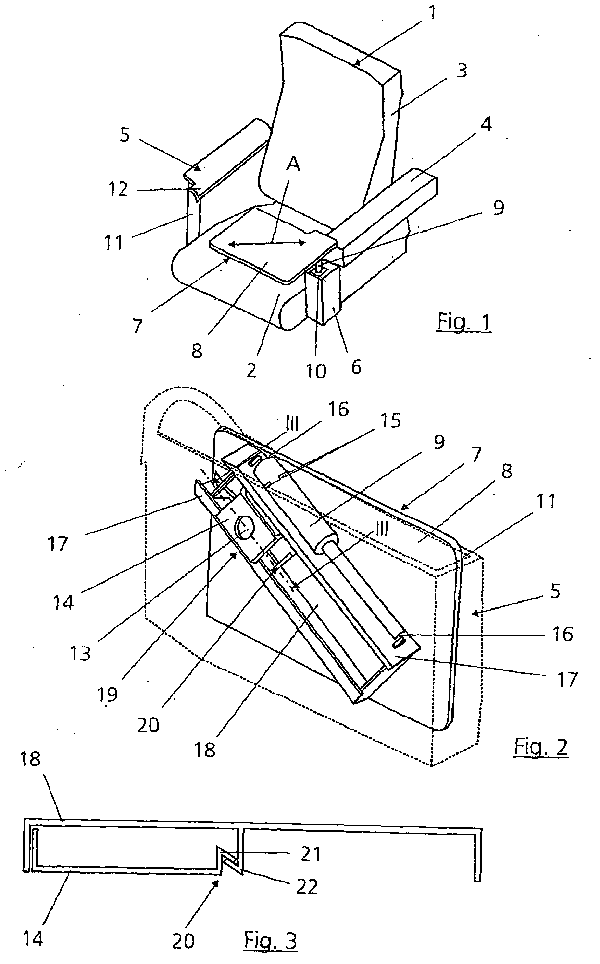

Fig. 1 zeigt in schematischer Darstellung einen Fahrzeugsitz 1 für ein Kraftfahrzeug, der in an sich bekannter Weise eine Sitzfläche 2 und eine Rückenlehne 3 aufweist. Neben der Sitzfläche 2 befindet sich eine linke Armlehne 4 und eine rechte Armlehne 5, auf welche ein Fahrer oder ein Beifahrer des Kraftfahrzeugs seine Arme auflegen kann.

Vor der linken Armlehne 4 ist ein Tischaufnahmeelement 6 in Form einer vertikalen Säule angeordnet und fest mit dem Fahrzeugsitz 1 verbunden. Das Tischaufnahmeelement 6 dient zur Aufnahme eines Ablagetisches 7, der eine in ihrem Gebrauchszustand im wesentlichen horizontal ausgerichtete Tischplatte 8 aufweist. Des weiteren weist der Ablagetisch 7 einen Tragarm 9 auf, der an seinem einen Ende in später näher erläuterter Art und Weise mit der Tischplatte 8 verbunden und an seinem anderen Ende in eine Aufnahmebohrung 10 des Tischaufnahmeelementes 6 eingesteckt ist. Somit ist die Tischplatte 8 über den Tragarm 9 mit dem Tischaufnahmeelement 6 verbunden und kann in der Höhe verstellt werden. In diesem Zusammenhang können nicht dargestellte Verriegelungselemente zwischen dem Tragarm 9 und dem Tischaufnahmeelement 6 vorgesehen sein, um die Tischplatte 8 in einer bestimmten Höhe zu arretieren. Selbstverständlich ist auch ein Verdrehen des Tragarms 9 in der Aufnahmebohrung 10 möglich, um die Tischplatte 8 zu verschwenken. Auch diese Bewegung könnte gegebenenfalls verriegelt werden. Des weiteren können an dem Tischaufnahmeelement 6 eine oder mehrere nicht dargestellte Einrichtungen zur Anbringung von Aschenbechern, Becherhaltern oder dergleichen angebracht sein.

Um den Ablagetisch 7 bei Nichtgebrauch verstauen zu können, ist die rechte Armlehne 5 mit einem Ablagefach 11 versehen, welches mittels eines als Armauflage dienenden Deckels 12 geöffnet bzw. verschlossen werden kann.

Den Ablagetisch 7 in seinem in dem Ablagefach 11 abgelegten Zustand zeigt Fig. 2. Das Ablagefach 11 der Armlehne 5 ist dabei der Übersichtlichkeit halber lediglich gestrichelt dargestellt. Neben dem Entfernen aus der Aufnahmebohrung 10 wurde der Tragarm 9 auch aus einer Aufnahmebohrung 13 entnommen, die in einem Verriegelungselement 14 vorgesehen ist. Zur Verbindung bzw. Verriegelung des Tragarms 9 mit dem Verriegelungselement 14 ist derselbe an seinem Umfang mit mehreren Vorsprüngen 15 versehen, die eine Verriegelung in der Art eines Bajonett-Verschlusses ermöglichen. Hierzu könnte das Verriegelungselement 14 nicht dargestellte Federelemente aufweisen, mit denen die Vorsprünge 15 in Eingriff gehen. Das Verriegelungselement 14 dient somit zur Verbindung des Tragarms 9 mit der Tischplatte 8.

Um eine ordentliche Ablage sämtlicher Teile des Ablagetisches 7 zu gewährleisten und ein Klappern während der Fahrt zu verhindern, ist die Tischplatte 8 mit zwei Halteelementen 16 versehen, an denen der Tragarm 9 zur Unterbringung in dem Ablagefach 11 anbringbar ist. Die Halteelemente 16 sind jeweils als Vorsprünge ausgebildet, an denen die beiden Enden des Tragarms 9 eingerastet werden können.

Im vorliegenden Fall sind die beiden Halteelemente 16 einer von zwei Führungsleisten 17 zugeordnet, die starr mit der Tischplatte 8 verbunden sind. Die beiden Führungsleisten 17 wiederum sind gleitend mit einer Führungsschiene 18 verbunden bzw. an derselben angebracht, die über das Verriegelungselement 14 mit dem Tragarm 9 verbunden ist. Die Führungsleisten 17 bilden gemeinsam mit der Führungsschiene 18 eine Verschiebeeinrichtung 19, mit der es möglich ist, die Tischplatte 8 gegenüber dem Tragarm 9 und somit gegenüber dem Tischaufnahmeelement 6 zu verschieben.

Die Verschiebeeinrichtung 19 verläuft im dargestellten Ausführungsbeispiel unter einem Winkel gegenüber den Seitenkanten der Tischplatte 8, so dass sich eine durch den Pfeil A in Fig. 1 angedeutete diagonale Verschieberichtung für die Tischplatte 8 ergibt. Auf diese Art und Weise kann die Tischplatte 8 besser den jeweiligen Anforderungen des Benutzers angepasst werden.

Des weiteren bildet das Verriegelungselement 14 mit der Führungsschiene 18 eine Überlastsicherung 20, die bei Überschreiten einer bestimmten, an derselben auftretenden Kraft bzw. eines bestimmten Drehmoments die Verbindung zwischen dem Verriegelungselement 14 und der Führungsschiene 18 und somit die Verbindung zwischen der Tischplatte 8 und dem Tischaufnahmeelement 6 löst.

Hierzu weist, wie in der schematischen Schnittdarstellung gemäß Fig. 3 deutlicher erkennbar ist, die Überlastsicherung 20 zwei Hakenelemente 21 und 22 auf. Das erste und im vorliegenden Fall obere Hakenelement 21 ist hierbei dem Verriegelungselement 14 und somit dem Tischaufnahmeelement 6 bzw. dem Tragarm 9 zugeordnet. Dagegen ist das zweite Hakenelement 22 der Führungsschiene 18 und somit der Tischplatte 8 zugeordnet. Diese Zuordnung der Führungsschiene 18 zu der Tischplatte 8 ist unabhängig von der oben beschriebenen Verschiebbarkeit der Führungsschiene 18 gegenüber der Tischplatte 8, da die Verschiebeeinrichtung 19 von der Überlastsicherung 20 entkoppelt ist. Diese Formulierung soll also lediglich die Funktion der Überlastsicherung 20 verdeutlichen.

Bis zu einer bestimmten Kraft hält diese Verbindung zwischen den beiden Hakenelementen 21 und 22, nach Überschreiten dieser Kraft rastet jedoch das obere Hakenelement 21 aus dem unteren Hakenelement 22 aus und löst so die Überlastsicherung 20 aus.

Nach diesem Auslösen der Überlastsicherung 20 ist es möglich, durch entsprechendes Einrasten der Hakenelemente 21 und 22 ineinander, das Verriegelungselement 14 wieder mit der Führungsschiene 18 zu verbinden, so dass der Ablagetisch 7 problemlos weiterbenutzt werden kann. Da sämtliche Bauteile des Äblagetisches 7 im vorliegenden Fall aus Kunststoff bestehen, ist bei zu häufigem Auslösen der Überlastsicherung 20 ein Verschleiß der beiden Hakenelemente 21 und 22 zu erwarten, so dass gegebenenfalls das Verriegelungselement 14 oder die Führungsschiene 18 ausgetauscht werden muss. Der Benutzer des Ablagetisches 7 wird jedoch beim ersten Auslösen der Überlastsicherung 20 merken, dass er bestimmte Bereiche des Ablagetisches 7, insbesondere die weit von dem Tragarm 9 entfernten Bereiche, weniger stark belasten darf, und er wird demnach in der Folgezeit wachsamer mit dem Ablagetisch 7 umgehen, so dass ein einmaliges Auslösen der Überlastsicherung 20 den Ablagetisch 7 und das die auf den Ablagetisch 7 einwirkenden Kräfte aufnehmende Tischaufnahmeelement 6 vor Beschädigungen schützen kann.

Statt der beschriebenen, als Rastsicherung ausgeführten und damit mehrfach verwendbaren Überlastsicherung wäre es auch möglich, dieselbe als einfache Bruchsicherung auszuführen, bei der beispielsweise das Verriegelungselement 14 nach jedem Auslösen ausgetauscht werden müsste. Dies wäre eine für den Benutzer kostspieligere Lösung, würde jedoch genauso zu einem Schutz des Ablagetisches 7 bzw. des Tischaufnahmeelementes 6 beitragen.

## Patentansprüche

1. Ablagetisch für ein Kraftfahrzeug, mit einer Tischplatte und mit einem Tragarm, wobei der Tragarm an seinem einen Ende mit der Tischplatte verbunden ist und mit seinem anderen Ende mit einem Tischaufnahmeelement (6) verbunden ist,
**dadurch gekennzeichnet,**
**dass** die Tischplatte (8) von dem Tragarm (9) abnehmbar und in einem Ablagefach (11) ablegbar ist, dass der Tragarm (9) von dem Tischaufnahmeelement (6) abnehmbar ist, und dass die Tischplatte (8) mit wenigstens einem Halteelement (16) versehen ist, an welchem der Tragarm (9) zur Unterbringung in dem Ablagefach (11) anbringbar ist.

2. Ablagetisch nach Anspruch 1,
**dadurch gekennzeichnet,**
**dass** zwischen der Tischplatte (8) und dem Tischaufnahmeelement (6) eine Überlastsicherung (20) vorgesehen ist.

3. Ablagetisch nach Anspruch 2,
**dadurch gekennzeichnet,**
**dass** die Überlastsicherung (20) zwischen dem Tragarm (9) und der Tischplatte (8) vorgesehen ist.

4. Ablagetisch nach einem der Ansprüche 2 oder 3,
**dadurch gekennzeichnet,**
**dass** die -Überlastsicherung (20) zwei ineinandergreifende Hakenelemente (21,22) aufweist, wobei eines der Hakenelemente (22) der Tischplatte (8) oder einem mit der Tischplatte (8) verbundenen Bauteil (Führungsschiene 18) zugeordnet ist, und dass das andere Hakenelement (21) dem Tischaufnahmeelement (6) oder dem Tragarm (9) oder einem mit dem Tischaufnahmeelement (6) oder dem Tragarm (9) verbundenen Bauteil (Verriegelungselement 14) zugeordnet ist.

5. Ablagetisch nach einem der Ansprüche 1 bis 4,
**dadurch gekennzeichnet,**
**dass** die Tischplatte (8) gegenüber dem Tischaufnahmeelement (6) mittels einer Verschiebeeinrichtung (19) verschiebbar ist.

6. Ablagetisch nach Anspruch 5,
**dadurch gekennzeichnet,**
**dass** die Verschiebeeinrichtung (19) eine mit dem Tischaufnahmeelement (6) oder dem Tragarm (9) verbundene Führungsschiene (18) und mit der Tischplatte (8) verbundene Führungsleisten (17) aufweist, welche entlang der Führungsschiene (18) verschiebbar sind.

7. Ablagetisch nach Anspruch 6,
**dadurch gekennzeichnet,**
**dass** die Führungsschiene (18) und die Führungsleisten (17) unter einem Winkel gegen die Seitenkanten der Tischplatte (8) verlaufen.

8. Ablagetisch nach einem der Ansprüche 1 bis 7,
**dadurch gekennzeichnet,**
**dass** die Tischplatte (8) gegenüber dem Tischaufnahmeelement (6) höhenverstellbar ist.

9. Fahrzeugsitz mit einem Ablagetisch (7) nach einem der Ansprüche 1 bis 8.

10. Fahrzeugsitz nach Anspruch 9,
mit wenigstens einer Armlehne (5),
**dadurch gekennzeichnet,**
**dass** die wenigstens eine Armlehne (5) ein Ablagefach (11) zur Unterbringung des Ablagetisches (7) aufweist.

## Claims

1. Storable table for a motor vehicle, with a table top and with a supporting arm, the supporting arm being connected at its one end to the table top and at its other end to a table-receiving element (6), **characterized in that** the table top (8) can be detached from the supporting arm (9) and stored in a storage compartment (11), **in that** the supporting arm (9) can be detached from the table-receiving element (6), and **in that** the table top (8) is provided with at least one retaining element (16), to which the supporting arm (9) can be attached for accommodation in the storage compartment (11).

2. Storable table according to Claim 1, **characterized in that** an overload protection system (20) is provided between the table top (8) and the table-receiving element (6).

3. Storable table according to Claim 2, **characterized in that** the overload protection system (20) is provided between the supporting arm (9) and the table top (8).

4. Storable table according to one of Claims 2 or 3, **characterized in that** the overload protection system (20) has two hook elements (21, 22) engaging in one another, one (22) of the hook elements being assigned to the table top (8) or to a component (guide rail 18) connected to the table top (8), and **in that** the other hook element (21) is assigned to the table-receiving element (6) or to the supporting arm (9) or to a component (locking element 14) connected to the table-receiving element (6) or to the supporting arm (9).

5. Storable table according to one of Claims 1 to 4, **characterized in that** the table top (8) can be displaced in relation to the table-receiving element (6) by means of a displacement device (19).

6. Storable table according to Claim 5, **characterized in that** the displacement device (19) has a guide rail (18) connected to the table-receiving element (6) or to the supporting arm (9) and guide strips (17), which can be displaced along the guide rail (18), connected to the table top (8).

7. Storable table according to Claim 6, **characterized in that** the guide rail (18) and the guide strips (17) extend at an angle in relation to the side edges of the table top (8).

8. Storable table according to one of Claims 1 to 7, **characterized in that** the table top (8) is height-adjustable in relation to the table-receiving element (6).

9. Vehicle seat with a storable table (7) according to one of Claims 1 to 8.

10. Vehicle seat according to Claim 9, with at least one armrest (5), **characterized in that** the at least one armrest (5) has a storage compartment (11) for accommodating the storable table (7).

## Revendications

1. Table d'appui pour un véhicule automobile, comprenant un plateau de table et un bras de support, le bras de support étant connecté à l'une de ses extrémités au plateau de table et étant connecté à son autre extrémité à un élément de réception de table (6),
**caractérisée en ce que**
le plateau de table (8) peut être enlevé du bras de support (9) et être déposé dans un compartiment de rangement (11), **en ce que** le bras de support (9) peut être enlevé de l'élément de réception de table (6) et **en ce que** le plateau de table (8) est pourvu d'au moins un élément de retenue (16) sur lequel le bras de support (9) peut être monté en vue de se loger dans le compartiment de rangement (11).

2. Table d'appui selon la revendication 1,
**caractérisée en ce que**
l'on prévoit entre le plateau de table (8) et l'élément de réception de table (6) une protection contré les surcharges (20).

3. Table d'appui selon la revendication 2,
**caractérisée en ce que**
la protection contre les surcharges (20) est prévue entre le bras de support (9) et le plateau de table (8).

4. Table d'appui selon l'une quelconque des revendications 2 ou 3,
**caractérisée en ce que**
la protection contre les surcharges (20) présente deux éléments de crochet venant en prise l'un dans l'autre (21, 22), l'un des éléments de crochet (22) étant associé au plateau de table (8) ou à un composant (rail de guidage 18) connecté au plateau de table (8) et **en ce que** l'autre élément de crochet (21) est associé à l'élément de réception de table (6) ou au bras de support (9) ou à un composant (élément de verrouillage 14) connecté à l'élément de réception de table (6) ou au bras de support (9).

5. Table d'appui selon l'une quelconque des revendications 1 à 4,
**caractérisée en ce que**
le plateau de table (8) peut être déplacé par rapport à l'élément de réception de table (6) au moyen d'un dispositif de déplacement (19).

6. Table d'appui selon la revendication 5,
**caractérisée en ce que**
le dispositif de déplacement (19) présente un rail de guidage (18) connecté à l'élément de réception de table (6) ou au bras de support (9) et des barres de guidage (17) connectées au plateau de table (8), qui peuvent être déplacées le long du rail de guidage (18).

7. Table d'appui selon la revendication 6,
**caractérisée en ce que**
le rail de guidage (18) et les barres de guidage (17) s'étendent suivant un certain angle par rapport aux arêtes latérales du plateau de table (8).

8. Table d'appui selon l'une quelconque des revendications 1 à 7,
**caractérisée en ce que**
le plateau de table (8) peut être réglé en hauteur par rapport à l'élément de réception de table (6).

9. Siège de véhicule comprenant une table d'appui (7) selon l'une quelconque des revendications 1 à 8.

10. Siège de véhicule selon la revendication 9, comprenant au moins un accoudoir (5),
**caractérisé en ce que**
l'au moins un accoudoir (5) présente un compartiment de rangement (11) pour loger la table d'appui (7).
